(19) Europäisches Patentamt
European Patent Office
Office européen des brevets

(11) **EP 2 523 186 A2**

(12) **EUROPEAN PATENT APPLICATION**

(43) Date of publication:
**14.11.2012 Bulletin 2012/46**

(51) Int Cl.:
*G09G 3/36* (2006.01)   *H04N 13/04* (2006.01)

(21) Application number: **12167606.8**

(22) Date of filing: **11.05.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Ting, Chin-Lung**<br>  **350 Chu-Nan 350, Miao-Li County (TW)**<br>• **Chi, Chao-Hsi**<br>  **350 Chu-Nan (TW)**<br>• **Feng, Yu-Hsin**<br>  **350 Chu-Nan (TW)**<br>• **Ting, Shih-Hsiang**<br>  **350 Chu-Nan (TW)** |
| (30) Priority: **13.05.2011  TW 100116923** | |
| (71) Applicants:<br>• **Innocom Technology (Shenzhen) Co., Ltd.**<br>  **Shenzhen City 518109 (CN)**<br>• **Chimei Innolux Corporation**<br>  **Miao-Li County (TW)** | (74) Representative: **2K Patentanwälte Blasberg Kewitz & Reichel**<br>  **Partnerschaft**<br>  **Corneliusstraße 18**<br>  **60325 Frankfurt a. M. (DE)** |

(54) **Display and glasses**

(57)    A security display system including security glasses and a security display (11) is provided. The security display includes a noise image generator (111), a synchronous packet generator (112), a display unit (113) and an image asymmetry generator (114). The noise image generator (111) generates a noise image signal according to a normal image signal. The synchronous packet generator (112) outputs a synchronous packet to the security glasses. The display unit (113) displays a normal image according to the normal image signal in a glasses-open period and a noise image according to the noise image signal in a glasses-shut period. The image asymmetry generator (114) corresponds to a first brightness integral when displaying the normal image in the glasses-open period, and to a second brightness integral when displaying the noise image the glasses-shut period. The second brightness integral is greater than the first brightness integral.

FIG. 5

## Description

This application claims the benefit of Taiwan application Serial No. 100116923, filed May 13, 2011, the subject matter of which is incorporated herein by reference.

## BACKGROUND OF THE INVENTION

### FIELD OF THE INVENTION

The invention relates in general to a display, and more particularly to a security display and security glasses.

### DESCRIPTION OF THE RELATED ART

As display technologies advance, display devices from personal mobile digital assistants, laptop computers, tablet computers and televisions have become indispensable parts in the daily life. However, information displayed by these display devices is quite confidential and disclosure of such confidential information to others is in fact undesired. Therefore, there is a need for a display technique that prohibits unwanted peeping from others.

### SUMMARY OF THE INVENTION

The invention is directed to a security display and security glasses.

According to an aspect the present invention, a security display is provided. The security display comprises noise image generator, a synchronous packet generator, a display unit and an image asymmetry generator. The noise image generator generates a noise image signal, and the synchronous packet generator outputs a synchronous packet to the security glasses according to a normal image signal and the noise image signal. The display unit displays a normal image according the normal image signal in a glasses-open period and a noise image according to the noise image signal in a glasses-shut period. The image asymmetry generator controls the display unit to correspond to a first brightness integral when displaying the normal image in the glasses-open period, and controls the display unit to correspond to a second brightness integral when displaying the noise image in the glasses-shut period. The second brightness integral is greater than the first brightness integral.

According to yet another aspect the present invention, security display glasses are provided. The security glasses comprise a receiver, a lens set, a driving circuit and a microcontroller. The receiver receives a synchronous packet, the driving circuit drives the lens set, and the microcontroller controls the driving circuit according to the synchronous packet.

The above and other aspects of the invention will become better understood with regard to the following detailed description of the preferred but non-limiting embodiments. The following description is made with reference to the accompanying drawings.

### BRIEF DESCRIPTION OF THE DRAWINGS

FIGS. 1 and 2 are schematic diagrams of a confidential protection display system.
FIG. 3 is a schematic diagram of a first type of noise image.
FIG. 4 is a schematic diagram of a second type of noise image.
FIG. 5 is a schematic diagram of a security display.
FIG. 6 is a flowchart of a security display method.
FIG. 7 is a schematic diagram of security glasses.
FIG. 8 is a table listing a synchronous code, an address code, a mode code and a command code of a synchronous packet.
FIG. 9 is a schematic diagram of security glasses in a 2D security mode.
FIG. 10 is a schematic diagram of security glasses in a 3D security mode.
FIG. 11 is a schematic diagram of security glasses in a 3D broadcast mode.
FIG. 12 is a signal timing diagram of a security display system according to a first embodiment of the present invention.
FIG. 13 is a signal timing diagram of a security display system according to a second embodiment of the present invention.
FIG. 14 is a signal timing diagram of a security display system according to a third embodiment of the present invention.
FIG. 15 is a signal timing diagram of a security display system according to a fourth embodiment of the present invention.

FIG. 16 is a signal timing diagram of a security display system according to a fifth embodiment of the present invention.

FIG. 17 is a signal timing diagram of a security display system according to a sixth embodiment of the present invention.

FIG. 18 is a signal timing diagram of a security display system according to a seventh embodiment of the present invention.

FIG. 19 is a signal timing diagram of a security display system according to an eighth embodiment of the present invention.

FIG. 20 is a signal timing diagram of a security display system according to a ninth embodiment of the present invention.

FIG. 21 is a signal timing diagram of a security display system according to a tenth embodiment of the present invention.

FIG. 22 is a signal timing diagram of a security display system according to an eleventh embodiment of the present invention.

FIG. 23 is a signal timing diagram of a security display system according to a twelfth embodiment of the present invention.

FIG. 24 is a schematic diagram of a normal image, a noise image and a backlight module according to a thirteenth embodiment of the present invention.

FIG. 25 is a schematic diagram of a normal image, a noise image and a backlight module according to a fourteenth embodiment of the present invention.

FIG. 26 is a schematic diagram a pixel structure according to a fifteenth embodiment of the present invention.

FIG. 27 is a schematic diagram a pixel structure according to a sixteenth embodiment of the present invention.

FIG. 28 is a schematic diagram of an image filter according to a seventeenth embodiment of the present invention.

FIG. 29 is a schematic diagram of adjusting a noise image signal according to an eighteenth embodiment of the present invention.

FIG. 30 is a mapping table of a security display 11 in a 2D mode and in a 3D mode.

FIG. 31 is a mapping table of a security display 11 in a 2D security mode and in a 3D security mode.

FIG. 32 is a schematic diagram of a display image after removing even-column display lines by a filter.

FIG. 33 is a schematic diagram of a display image after removing even-row display lines by a filter

FIG. 34 is a schematic diagram of adjusting another noise image signal according to an eighteenth embodiment of the present invention.

FIG. 35 is a signal timing diagram of a security display system according to a nineteenth embodiment of the present invention.

DETAILED DESCRIPTION OF THE INVENTION

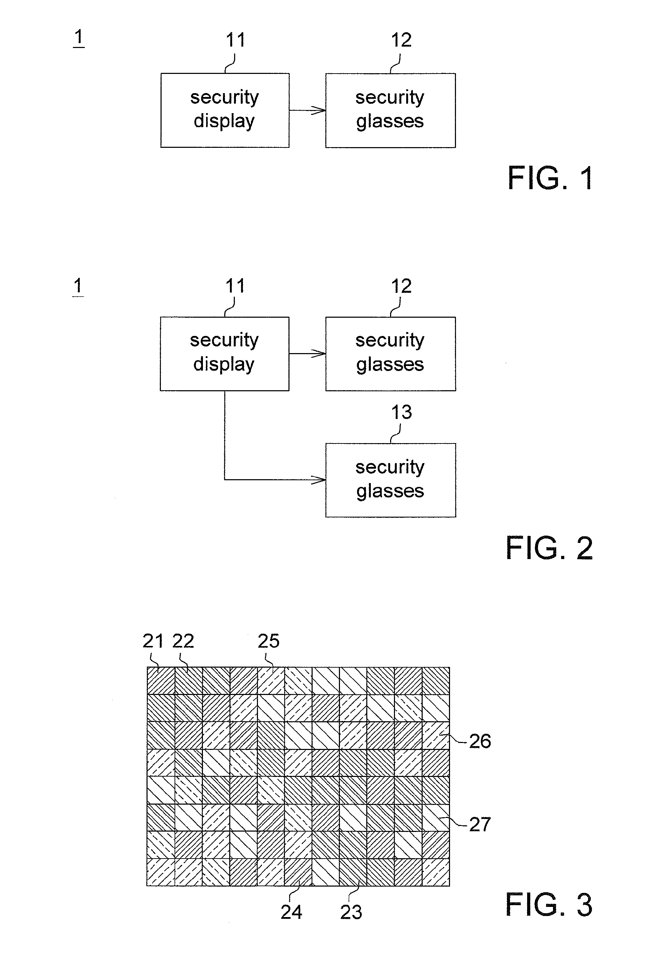

FIGS. 1 and 2 show schematic diagrams of a security display system according to an embodiment of the present invention. A security display system 1 comprises a security display 11 and security glasses 12. For example, the security glasses 12 are two-dimensional (2D) security or three-dimensional (3D) security glasses. The security display 11, via a wired or wireless data transmission means between the security display 11 and the security glasses 12, outputs a synchronous packet to the security glasses 12. Through the security glasses 12, a user is able to observe a normal image displayed by the security display 11. In contrast, without the security glasses 12, a user is then unable to observe a normal image but is only able to perceive a noise image displayed by the security display 11. Therefore, unwanted peeping on image information displayed by the security display 11 by others is effectively prohibited.

It should be noted that a pair of security is depicted in FIG. 1 for example, and the security display system 11 is however not limited to implementing only one pair of security glasses. That is, the security display system 11 may also simultaneously apply a plurality of pairs of security glasses. For example, the security display system 11 further comprises a pair of security glasses 13. Accordingly, a user wearing the security glasses 12 is able to observe a normal image displayed by the security display 11, and a user wearing the security glasses 13 is able to observe another normal image displayed by the security display 11. Without the security glasses 12 or the security glasses, a user is unable to observe any normal images but only is able to perceive a noise image displayed by the security display 11.

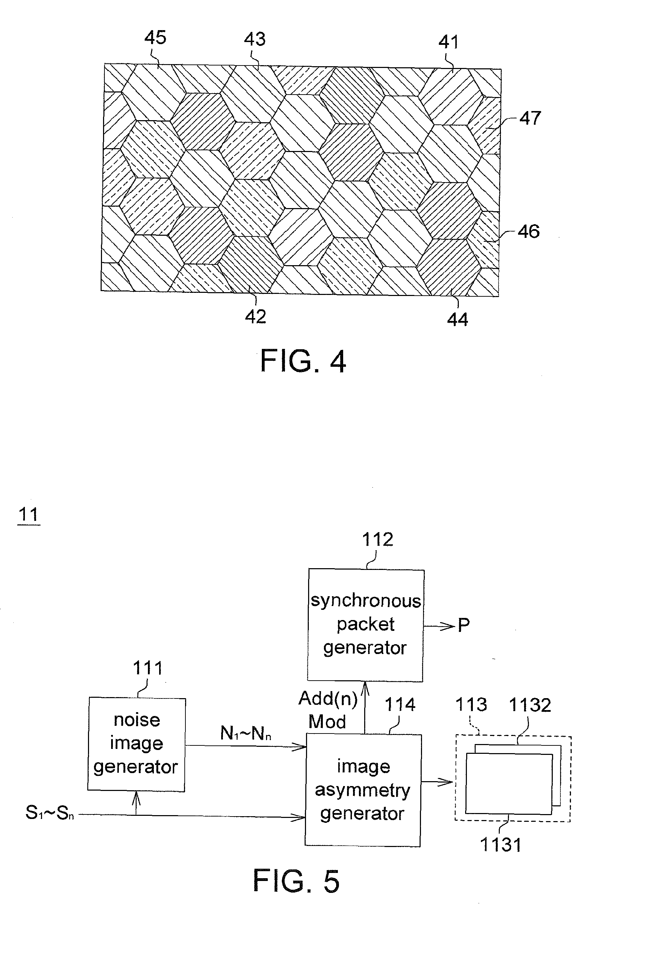

FIG. 3 shows a schematic diagram of a first type of noise image; FIG. 4 shows a schematic diagram of a second type of noise image. It should be noted that noise images may be realized by various approaches, but are not limited to the examples illustrated in FIGS. 3 and 4. Further, patterns of noise images may also be adjusted as desired by actual requirements. For example, a noise image may comprise polygonal color blocks in several different colors and having a length ranging from 3 to 30 pixels. For example, a noise image in FIG. 3 comprises a white quadrilateral block 21, a red quadrilateral block 22, a green quadrilateral block 23, a blue quadrilateral block 24, a cyan quadrilateral block 25, a magenta quadrilateral block 26 and a yellow quadrilateral block 27, all of which have a length between 3 to 30 pixels.

A noise image in FIG. 4 comprises a white hexagonal block 41, a red hexagonal block 42, a green hexagonal block 43, a blue hexagonal block 44, a cyan hexagonal block 45, a magenta hexagonal 46 and a yellow hexagonal block 47, all of which have a length between 3 to 30 pixels.

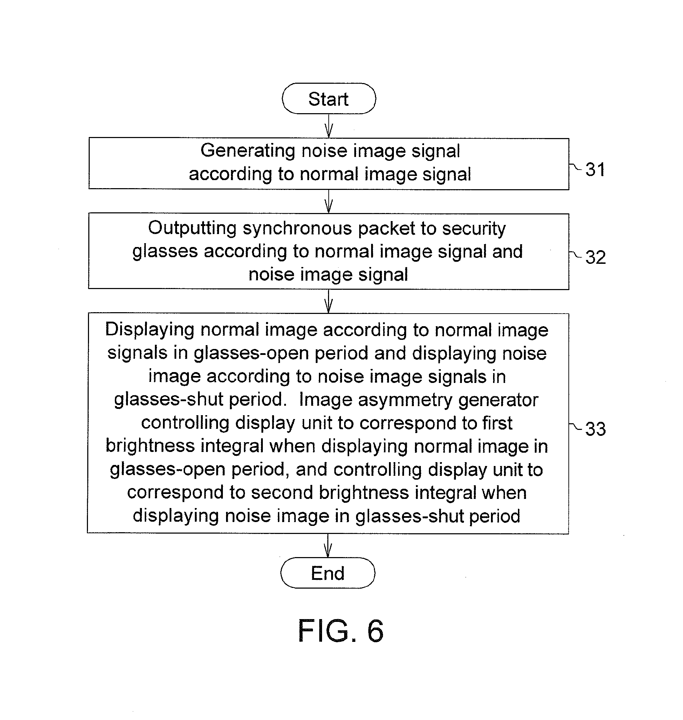

FIG. 5 shows a schematic diagram of a security display. FIG. 6 shows a flowchart of a security display method. A security display 11 comprises a noise image generator 111, a synchronous packet generator 112, a display unit 113 and an image asymmetry 114. The noise image generator 111, the synchronous packet generator 112 and an image asymmetry 114 are realized by a timing controller or a microcontroller, for example. The security display method, applicable to the foregoing security display system 1, comprises steps below. In Step 31, the noise image generator 11 generates noise image signals $N_1$ to $N_n$ according to normal image signals $S_1$ to $S_n$. In Step 32, according o the normal image signals $S_1$ to $S_n$ and the noise image signals $N_1$ to $N_n$, the image asymmetry generator 114 controls the synchronous packet generator 112 to output a synchronous packet P to the security glasses 12. More specifically, the image asymmetry generator 114 generates an address code Add(n) and a mode code Mod according to the normal image signals $S_1$ to $S_n$ and the noise image signals $N_1$ to $N_n$, and the synchronous packet generator 112 generates the synchronous packet P according to the address code Add(n) and the mode code Mod.

In Step 33, the display unit 113 displays a normal image according to the normal image signals $S_1$ to $S_n$ in a glasses-open period and displays a noise image according to the noise image signals $N_1$ to $N_n$ in a glasses-shut period. The image asymmetry generator 144 controls the display unit 113 to correspond to a first brightness integral when displaying the normal image in the glasses-open period, and controls the display unit 113 to correspond to a second brightness integral when displaying the noise image in the glasses-shut period. The second brightness integral is greater than the first brightness integral. Preferably, the second brightness integral is greater than four times the first brightness integral.

Further, the display unit 113 comprises a panel 1131 and a backlight module 1132. The backlight module 1132 provides a backlight to the panel 1131. The image asymmetry generator 114 controls the panel 1131 or the backlight module 1132, such that the second brightness integral is greater than the first brightness integral. There are various approaches for rendering a second brightness integral greater than the first brightness integral. For example, the image asymmetry generator 114 controls a display period of the noise image to be longer than that of the normal image. Alternatively, the image asymmetry generator 114 controls a display frequency of the noise image to be higher than that of the normal image. In addition, the image asymmetry generator 114 may also control a backlight brightness of the noise image to be larger than that of the normal image. Alternatively, by a design of adding a fourth-color sub-pixel to a pixel structure, an image brightness of the noise image is increased when the noise image is displayed. Further, the image asymmetry generator 114 may also control the backlight module 1132 in partitions to generate different backlight brightnesses at different backlight regions.

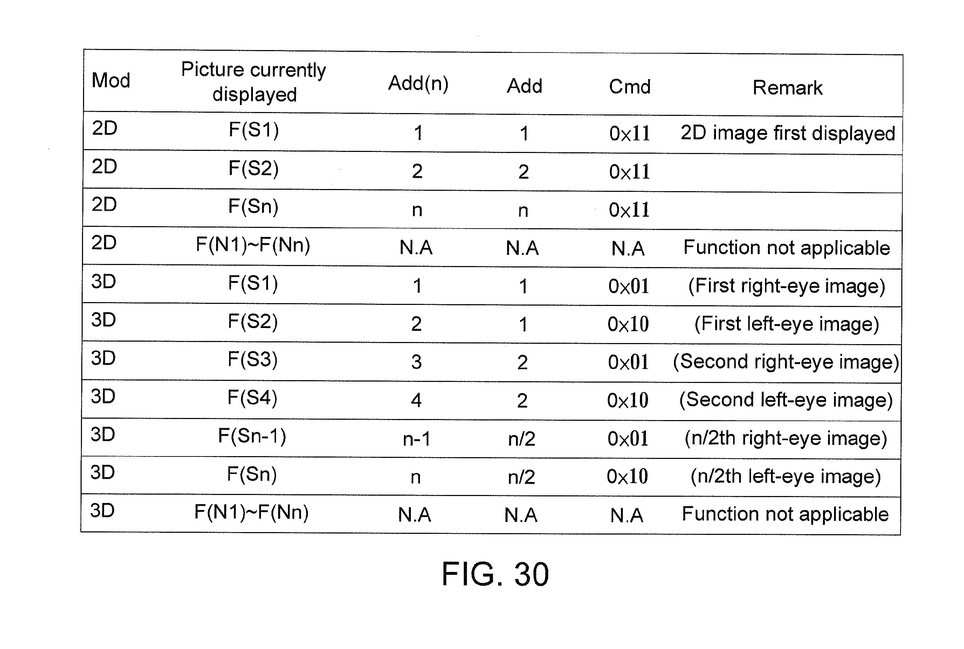

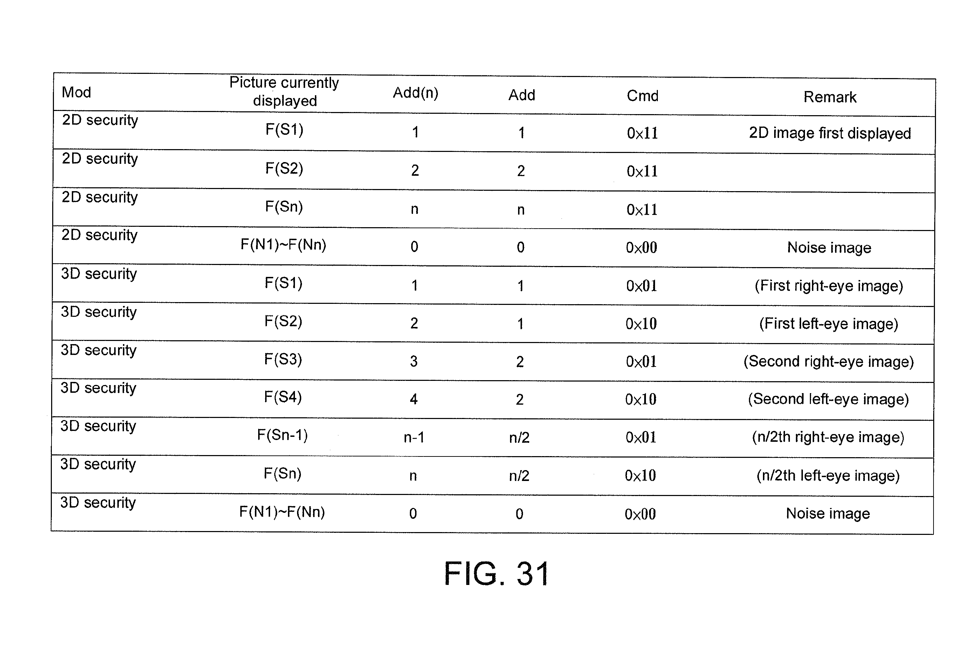

The description below is given with reference to FIGS. 5, 30 and 31. FIG. 30 shows a mapping table of the security display 11 in a 2D mode and a 3D mode. FIG. 31 shows a mapping table of the security display 11 in a 2D security mode and a 3D security mode. The security display 11 is selectively operable among the 2D mode, the 3D mode, the 2D security mode and the 3D security mode. The mode code Mod outputted by the image asymmetry generator 114 indicates in which of 2D mode, the 3D mode, the 2D security mode and the 3D security mode the security display 11 operates. The address code Add(n) outputted by the image asymmetry generator 114 corresponds to the normal image signals $S_1$ to $S_n$. When the normal image signals $S_1$ to $S_n$ are sequentially inputted into the image asymmetry generator 114, the image asymmetry generator 114 sequential outputs address codes Add(n) of 1 to n. According to the normal image signals $S_1$ to $S_n$, the image asymmetry generator 114 sequentially displays normal images $F(S_1)$ to $F(S_n)$. When the image asymmetry generator 114 displays the normal images $F(S_1)$ to $F(S_n)$ according to the noise image signals $S_1$ to $S_n$, the image asymmetry generator 114 outputs an address code Add(n) of 0.

According to the address code Add(n), the image asymmetry generator 114 outputs an address code Add, which indicates an address of security glasses to which the synchronous packet generator 112 wishes to transmit. When the security operate in the 2D mode or the 2D security mode, the address code Add and the address code Add(n) are the same. When the security glasses 11 operate in the 3D mode or the 3D security mode, the address code Add is a half of the address code Add(n) since the normal images $F(S_1)$ to $F(S_n)$ respectively comprise a left image and a right image. A command code Cmd controls opening and shutting of the corresponding security glasses 12.

It should be noted that, the normal images $(S_1)$ to $F(S_n)$ may respectively be observed by different users. The security glasses may receive a dedicated packet according to the address code Add and correspondingly control opening and shutting of the lenses according to the command code Cmd. Thus, each user is enabled to observe different normal images on one single security display.

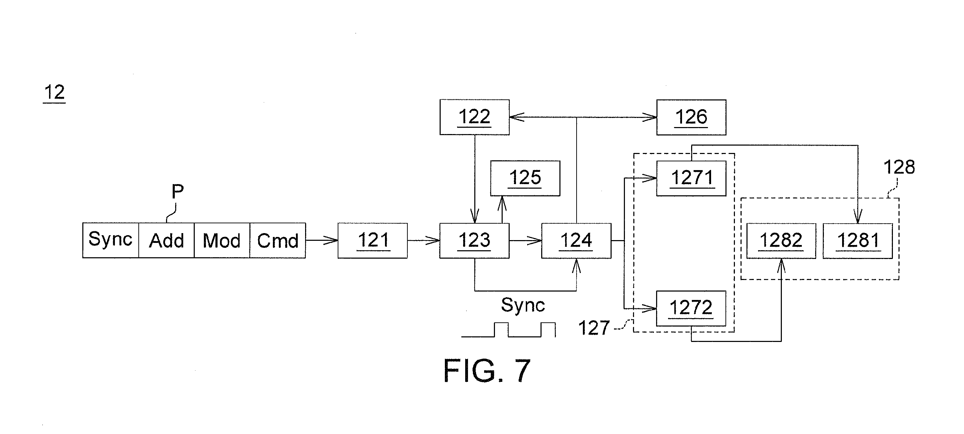

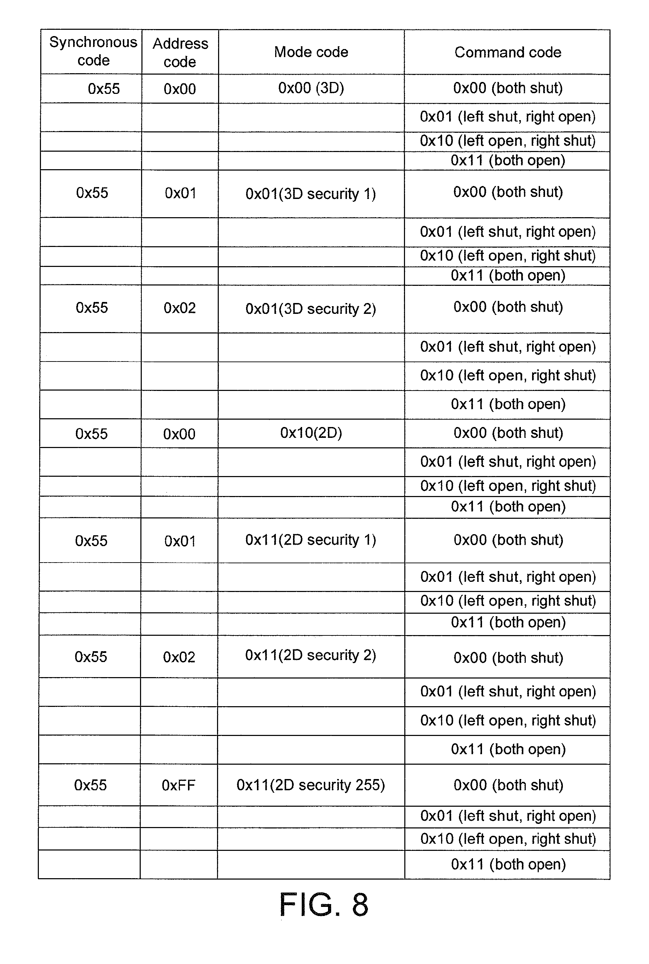

FIG. 7 shows a schematic diagram of security glasses. FIG. 8 shows a table listing the synchronous code, the address code, the mode code and the command code of the synchronous packet. The security glasses 12 comprise a receiver 121, a register 122, a decoder 123, a microcontroller 124, a mode display device 125, an address display device 126, a driving circuit 127 and a lens set 128. The synchronous packet P comprises the synchronous code Sync, the address code Add, the mode code Mod and the command code Cmd.

A mode code Mod of 0x00 indicates the security glasses 12 are in the 3D mode; a mode code Mod of 0x01 indicates the security glasses 12 are in the 3D security mode; a mode code Mod of 0x10 indicates the security glasses 12 are in the 2D mode; and a mode code Mod of 0x11 indicates the security glasses 12 are in the 2D security mode.

A command code Cmd of 0x00 indicates a right lens 1281 and a left lens 1282 are both shut; a command code Cmd of 0x01 indicates the right lens 1281 and a left lens 1282 are both open; a command code Cmd of 0x10 indicates the left lens 1282 is shut and the right lens 1281 is open; and a command code Cmd of 0x11 indicates the left lens 1282 is open and the right lens 1281 is shut.

The register 122 stores a predetermined address, which is a predetermined glasses address and a predetermined broadcast address, for example. When the address code Add matches with the predetermined glasses address of the security glasses 12, it means that a normal image displayed by the security display 11 may be observed through the security glasses 12. In contrast, a normal image displayed by the security display 11 cannot be observed through other security glasses 12 that have different predetermined glasses addresses from the address code Add. When the address code Add matches with the predetermined broadcast address of the security glasses 12, it means that a normal image displayed by the security display 11 may be observed through the security glasses 12, while a normal image displayed by the security display 11 may also be observed through security glasses having a same predetermined broadcast address. For illustrative purposes in the description below, 0x00 and 0x01 are taken as respective examples of the predetermined broadcast address and the predetermined glasses address of the security glasses 12.

For example, the receiver 121 is a wired receiver or a wireless receiver for receiving the synchronous packet P. The decoder 123 determines whether the address code Add is identical to the predetermined broadcast address 0x00 or the predetermined glasses address 0x01. When the address code Add is the same as the predetermined glasses address 0x01, the decoder 123 outputs a command signal according to the command code to the microcontroller 124, and a mode signal according to the mode code to the display device 125. Further, the decoder 123 outputs an address signal according to the address code 124 to the microcontroller 124 to display the address signal at the address display device 126. The microcontroller 124 controls the driving circuit 127 according to the command signal. Further, the driving circuit 127 comprises a right lens driver 1271 and a left lens driver 1272, and the lens set 128 comprises a right lens 1281 and a left lens 1282. The right lens driver 1271 and the left lens driver 1272 respectively drive the right lens 1281 and the left lens 1282. The microcontroller 124 controls the right lens driver 1271 and the left lens driver 1272 according to the command signal to correspondingly open or shut the right lens 1281 and the left lens 1282.

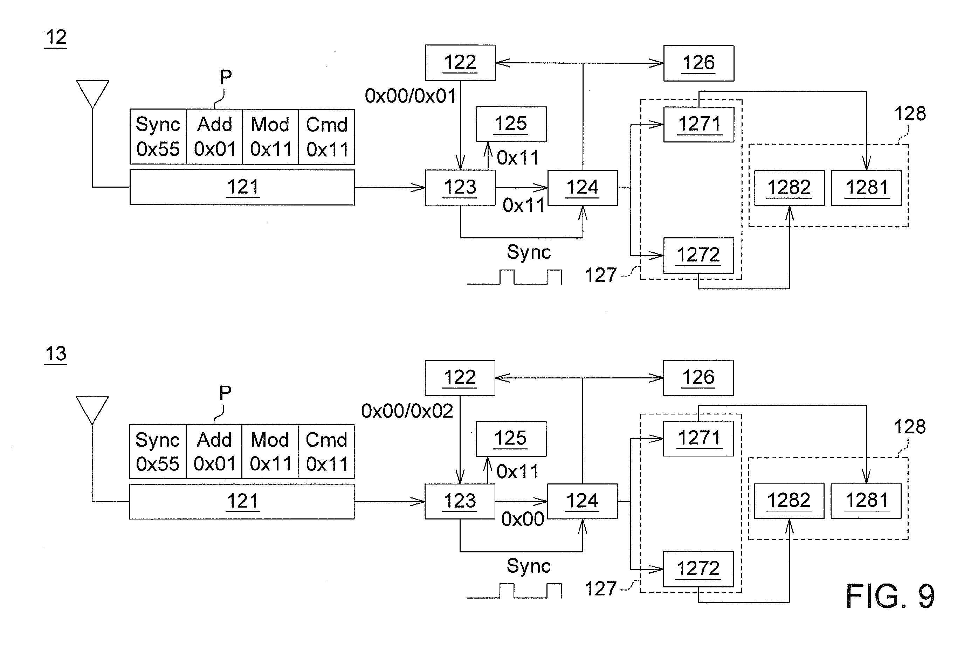

FIG. 9 shows a schematic diagram of the security in the 2D security mode. A main difference between the security glasses 13 and the security glasses 12 is that, the predetermined glasses address of the security glasses 13 is 0x02 whereas the predetermined glasses address of the security 12 is 0x01. The synchronous code Sync, the address code Add, the mode code Mod and the command code Cmd of the synchronous packet P are respectively 0x55, 0x01, 0x11 and 0x11. When the address code Add and the predetermined glasses address are both 0x01, it means that the synchronous packet P is for the security glasses 12. The mode code Mod of 0x11 indicates the 2D security mode, and the command mode Cmd of 0x11 indicates both the right lens 1281 and the left lens 1282 are to be opened. The microcontroller 124 controls the right lens driver 1271 and the left lens driver 1272 according to the command code Cmd to respectively drive the right lens 1281 and the left lens 1282.

On the other hand, when the predetermined glasses address of the security glasses 13 is 0x02 and the address code Add is 0x01, it means the synchronous packet P is not dedicated for the security glasses 13. Since the synchronous packet P is not dedicated for the security glasses 13, the decoder 123 outputs 0x00 to prompt the microcontroller 124 to control the right lens driver 1271 and the left lens driver 1272 to respectively shut the right lens 1281 and the left lens 1282. Therefore, a user is only allowed to observe a normal image through the security glasses when the predetermined glasses address and the predetermined broadcast address are the same as the address code Add, and so security of displayed data is increased.

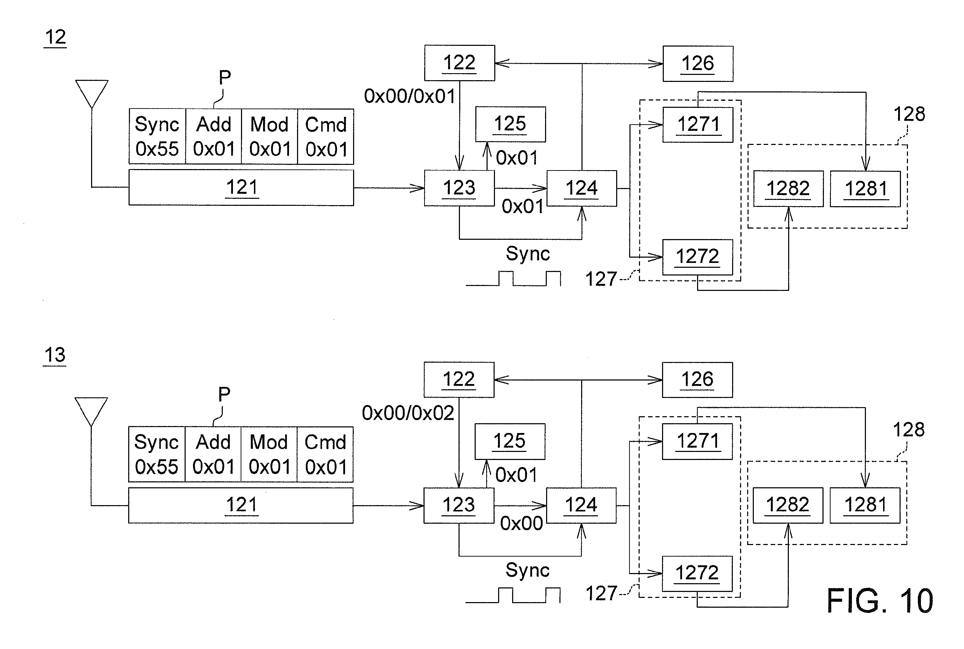

FIG. 10 shows a schematic diagram of the security glasses in the 3D security mode. A main difference between FIGS. 10 and 9 is that, the synchronous code Sync, the address code Add, the mode code Mod and the command code Cmd of the synchronous packet P in FIG. 10 are respectively 0x55, 0x01, 0x01 and 0x01. The mode code of 0x01 indicates the 3D security mode, and the command code Cmd of 0x01 indicates the right lens 1281 is open and the left lens 1282 is shut.

When the address code Add and the predetermined glasses address are both 0x01, it means that the synchronous packet P is dedicated for the security glasses 12. The decoder 123 output a command signal according the command code Cmd to the microcontroller 124. The microcontroller 124 controls the right lens driver 1271 according to the command signal to open the right lens 1281, and controls the left lens driver 1272 according to the command signal to shut the left lens 1282.

On the other hand, when the predetermined glasses address of the security glasses 13 is 0x02 and the address code Add is 0x01, it means the synchronous packet P is not dedicated for the security glasses 13. Since the synchronous packet P is not dedicated for the security glasses 13, the decoder 123 outputs 0x00 to prompt the microcontroller 124 to control the right lens driver 1271 and the left lens driver 1272 to respectively shut the right lens 1281 and the left lens 1282. Therefore, a user is only allowed to observe a normal image through the security glasses when the predetermined glasses address and the predetermined broadcast address are the same as the address code Add, and so security of displayed data is increased.

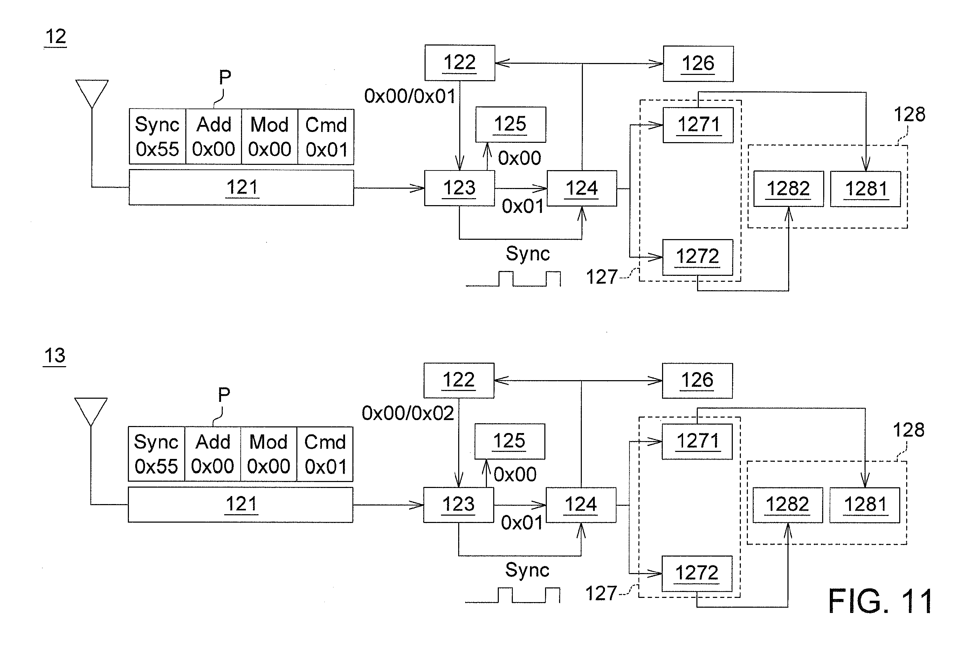

FIG. 11 shows a schematic diagram of the security glasses in a 3D broadcast mode. A main difference between FIGS. 11 and 10 is that, the synchronous code Sync, the address code Add, the mode code Mod and the command code Cmd of the synchronous packet P in FIG. 10 are respectively 0x55, 0x00, 0x00 and 0x01. The mode code of 0x00 indicates the 3D broadcast mode, and the command code Cmd of 0x01 indicates the right lens 1281 is open and the left lens 1282 is shut.

When the address code Add and the predetermined broadcast address are both 0x01, it means that the synchronous packet P is dedicated for the security glasses 12. The decoder 123 of the security glasses 12 outputs a command signal according to the command code Cmd to the microcontroller 124. The microcontroller 124 of the security glasses 12 controls the right lens driver 1271 according to the command signal to open the right lens 1281, and controls the left lens driver 1272 according to the command signal to shut the left lens 1282.

Similarly, when the address code Add and the predetermined broadcast address are both 0x00, it means the synchronous packet P is also dedicated for the security glasses 13. The decoder 123 of the security glasses 13 output a command signal according to the command code Cmd to the microcontroller 124. The microcontroller 124 of the security glasses 13 controls the right lens driver 1271 according to the command signal to open the right lens 1281, and controls the left lens driver 1272 according to the command signal to shut the left lens 1282. Thus, users wearing the security glasses 12 and the security glasses 13 are both enabled to observe a normal image displayed on the security display.

First Embodiment

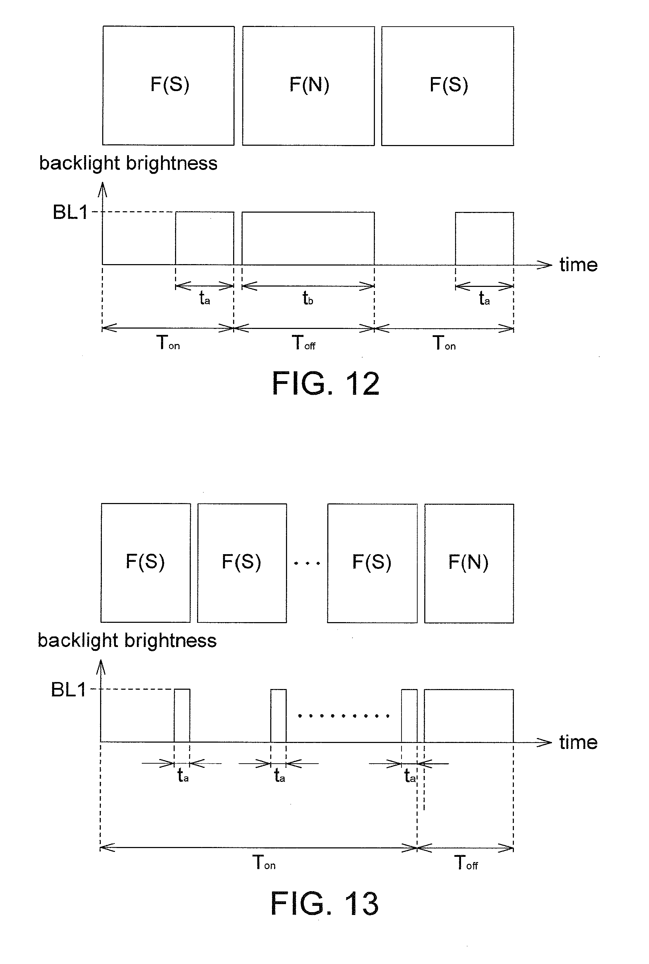

The description below is given with reference to FIGS. 5 and 12. FIG. 12 shows a signal timing diagram of a security display system according to a first embodiment of the present invention. In the first embodiment, a display frequency of a normal image F(S) and a display frequency of a noise image F(N) are the same. The image asymmetry generator 114 controls a display period of the noise image to be greater than that of the normal image, so that the second brightness integral is greater than the first brightness integral. To render a greater display period of the noise image than that of the normal image, the image asymmetry generator 114 controls a noise lighting interval tb of the backlight module 1132 in a glasses-shut period Toff to be greater than a normal lighting interval ta of the backlight module 1132 in a glasses-open period Ton. In FIG. 12, the glasses-open period Ton includes the normal lighting interval ta, and the glasses-shut period Toff includes the noise lighting interval tb. The image asymmetry generator 114 controls the backlight module 1132 to maintain a backlight brightness BL1 in the normal lighting interval ta and in the noise lighting interval tb, where the noise lighting interval tb is greater than the normal lighting interval ta.

In FIG. 12, the first brightness integral equals a product of the backlight brightness BL1 and the normal lighting interval ta, and the second brightness integral equals a product of the backlight brightness BL1 and the noise lighting interval tb. Since the noise lighting interval tb is greater than the normal lighting interval ta, the second brightness integral being greater than the first brightness integral is achieved.

Second Embodiment

The description below is given with reference to FIGS. 5 and 13. FIG. 13 shows a signal timing diagram of a security display system according to a second embodiment of the present invention. A main difference between the second and first embodiments is that, the glasses-open period Ton in the second embodiment includes a plurality of normal lighting intervals ta. In the second embodiment, the display frequency of a normal image F(S) is greater than the display frequency of a noise image F(N). The image asymmetry generator 114 controls the display period of the noise image to be greater than that of the normal image, so that the second brightness integral is greater than the first brightness integral. To render a greater display period of the noise image than that of the normal image, the image asymmetry generator 114 controls the backlight module 1132 to maintain the backlight brightness BL1 in the normal lighting interval ta and in the noise lighting interval tb, wherein the noise lighting interval tb is greater than a total of all the normal lighting intervals ta.

In FIG. 13, the first brightness integral equals a product of the backlight brightness BL1 and all the normal lighting intervals ta, and the second brightness integral equals a product of the backlight brightness BL1 and the noise lighting interval tb. Since the noise lighting interval tb is greater than the total of all normal lighting intervals ta, the second brightness integral being greater than the first brightness integral is achieved.

Third Embodiment

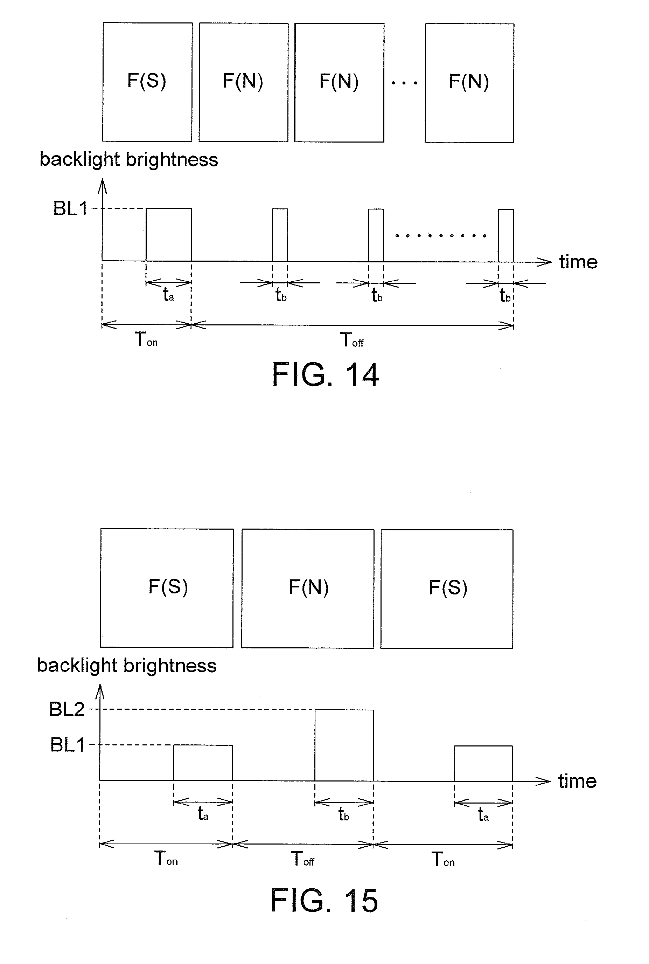

The description below is given with reference to FIGS. 5 and 14. FIG. 14 shows a signal timing diagram of a security display system according to a third embodiment of the present invention. A main difference between the third and first embodiments is that, the glasses-shut period Toff in the third embodiment includes a plurality of noise lighting intervals tb. In the third embodiment, the display frequency of a normal image F(S) is smaller than the display frequency of a noise image F(N). The image asymmetry generator 114 controls the display period of the noise image to be greater than that of the normal image, so that the second brightness integral is greater than the first brightness integral. To render a greater display period of the noise image than that of the normal image, the image asymmetry generator 114 controls the backlight module 1132 to maintain the backlight brightness BL1 in the normal lighting interval ta and the noise lighting interval tb, wherein a total of the noise lighting intervals tb is greater than the normal lighting interval ta.
In FIG. 14, the first brightness integral equals a product of the backlight brightness BL1 and the normal lighting interval ta, and the second brightness integral equals a product of the backlight brightness BL1 and all the noise lighting intervals tb. Since the total of the noise lighting intervals tb is greater than the normal lighting interval ta, the second brightness integral being greater than the first brightness integral is achieved.

Fourth Embodiment

The description below is given with reference to FIGS. 5 and 15. FIG. 15 shows a signal timing diagram of a security display system according to a fourth embodiment of the present invention. A main difference between the fourth and first embodiments is that, the image asymmetry generator 114 controls the backlight module 1132 to maintain the backlight brightness BL1 in the normal lighting interval ta and a backlight brightness BL2 in the noise lighting interval tb. In the fourth embodiment, the display frequency of a normal image F(S) equals the display frequency of a noise image F(N). The image asymmetry generator 114 controls the backlight brightness BL2 of the noise image to be greater than the backlight brightness BL1 of the normal image, so that the second brightness integral is greater than the first brightness integral. To render a greater backlight brightness BL2 of the noise image than the backlight brightness BL1 of the normal image, the image asymmetry generator 114 controls the backlight module 1132 to maintain the backlight brightness BL1 in the normal lighting interval ta and the backlight brightness BL2 in the noise lighting interval tb. The backlight brightness BL2 is greater than the backlight brightness BL1.
In FIG. 15, the first brightness integral equals a product of the backlight brightness BL1 and the normal lighting interval ta, and the second brightness integral equals a product of the backlight brightness BL2 and the noise lighting interval tb. Since product of the backlight brightness BL1 and the normal lighting interval ta is greater than the product of the backlight brightness BL2 and the noise lighting interval tb, the second brightness integral being greater than the first brightness integral is achieved.

Fifth Embodiment

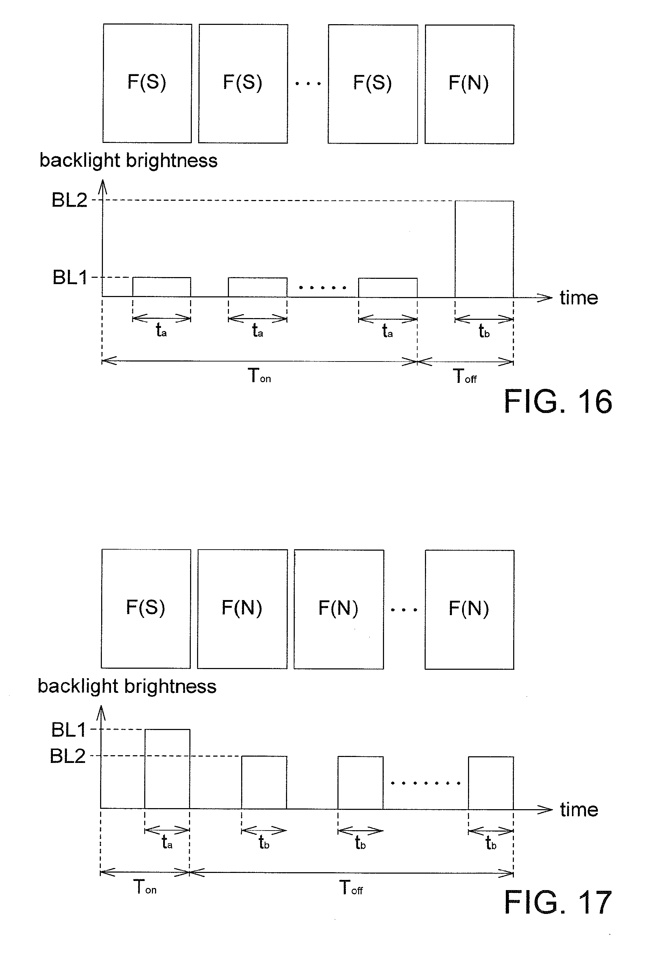

The description below is given with reference to FIGS. 5 and 16. FIG. 15 shows a signal timing diagram of a security display system according to a fifth embodiment of the present invention. A main difference between the fourth and second embodiments is that, the image asymmetry generator 114 controls the backlight module 1132 to maintain the backlight brightness BL1 in the normal lighting interval ta and the backlight brightness BL2 in the noise lighting interval tb. In the fifth embodiment, the display frequency of a normal image F(S) is greater than the display frequency of a noise image F(N). The image asymmetry generator 114 controls the backlight brightness BL2 of the noise image to be greater than the backlight brightness BL1 of the normal image, so that the second brightness integral is greater than the first brightness integral. To render a greater backlight brightness BL2 of the noise image than the backlight brightness BL1 of the normal image, the image asymmetry generator 114 controls the backlight module 1132 to maintain the backlight brightness BL1 in the normal lighting interval ta and the backlight brightness BL2 in the noise lighting interval tb.
In FIG. 16, the first brightness integral equals a product of the backlight brightness BL1 and all the normal lighting intervals ta, and the second brightness integral equals a product of the backlight brightness BL2 and the noise lighting interval tb. Since the product of the backlight brightness BL2 and the noise lighting interval tb is greater than the product of the backlight brightness BL1 and all the normal lighting intervals ta, the second brightness integral being greater than the first brightness integral is achieved.

Sixth Embodiment

The description below is given with reference to FIGS. 5 and 17. FIG. 17 shows a signal timing diagram of a security display system according to a sixth embodiment of the present invention. A main difference between the sixth and third embodiments is that, the image asymmetry generator 114 controls the backlight module 1132 to maintain the backlight brightness BL1 in the normal lighting interval ta and a backlight brightness BL2 in the noise lighting interval tb, where the backlight brightness BL2 is smaller than the backlight brightness BL1. In the sixth embodiment, although the backlight brightness of the noise image BL2 is smaller than the backlight brightness BL1 of the normal image, the image asymmetry generator 114 controls the display frequency of a noise image F(N) to be greater than the display frequency of a normal image F(S), so that the second brightness integral is greater than the first brightness integral. To render a greater backlight brightness BL2 of the noise image than the backlight brightness BL1 of the normal image, the image asymmetry generator 114 controls the backlight module 1132 to maintain the backlight brightness BL1 in the normal lighting interval ta and the backlight brightness BL2 in the noise lighting interval tb.

In FIG. 17, the first brightness integral equals a product of the backlight brightness BL1 and the normal lighting interval ta, and the second brightness integral equals a product of the backlight brightness BL2 and all the noise lighting intervals tb. Since product of the backlight brightness BL2 and all the noise lighting intervals tb is greater than the product of the backlight brightness BL1 and the normal lighting interval ta, the second brightness integral being greater than the first brightness integral is achieved.

Seventh Embodiment

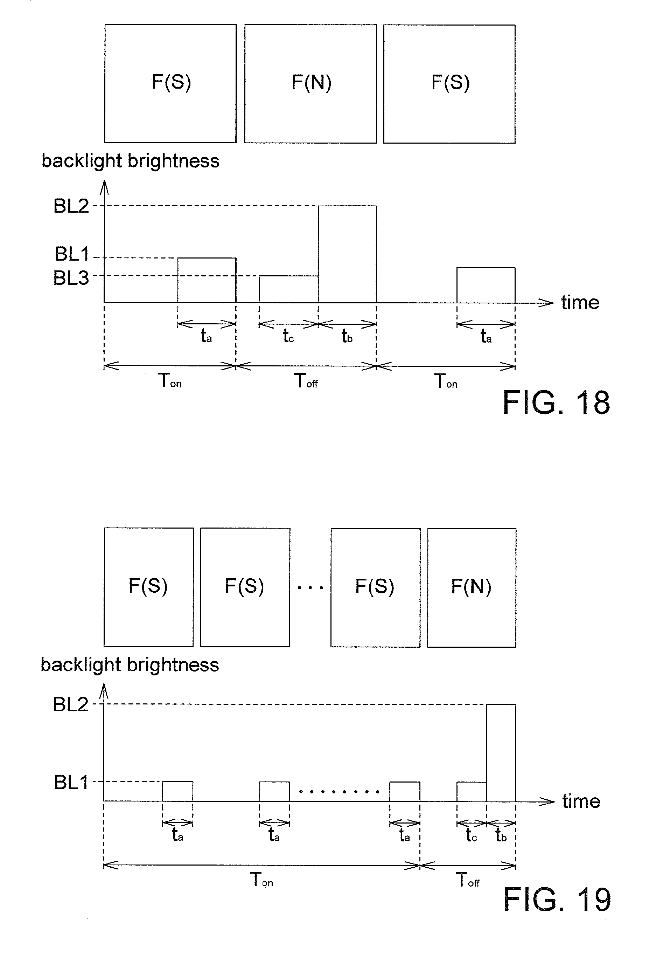

The description below is given with reference to FIGS. 5 and 18. FIG. 18 shows a signal timing diagram of a security display system according to a seventh embodiment of the present invention. A main difference between the seventh and fourth embodiments is that, the image asymmetry generator 114 further controls the backlight module 1132 to maintain a backlight brightness BL3 in a noise lighting interval tc. The backlight brightness BL2 is greater than the backlight brightness BL1, and the backlight brightness BL1 is greater than the backlight brightness BL3. In the seventh embodiment, the display frequency of a normal image F(S) equals the display frequency of a noise image F(N); the glasses-open period Ton includes the normal lighting interval ta, and the glasses-shut period Toff includes the noise lighting interval tb and a noise lighting interval tc. The image asymmetry generator 114 controls the backlight brightness BL2 of the noise image in the noise lighting interval tb to be greater than the backlight brightness BL1 of the normal image, and controls the backlight brightness BL3 of the noise image in the noise lighting interval tc to be smaller than the backlight brightness BL1 of the normal image, so that the second brightness integral is greater than the first brightness integral. To render a greater backlight brightness BL2 of the noise image than the backlight brightness BL1 of the normal image, the image asymmetry generator 114 controls the backlight module 1132 to maintain the backlight brightness BL1 in the normal lighting interval ta, the backlight brightness BL2 in the noise lighting interval tb, and the backlight brightness BL3 in the noise lighting interval tc. The backlight brightness BL2 is greater than the backlight brightness BL1, and the backlight brightness BL1 is greater than the backlight brightness BL3.

In FIG. 18, the first brightness integral equals a product of the backlight brightness BL1 and the normal lighting interval ta, the second brightness integral equals a sum of product of the backlight brightness BL2 and the noise lighting interval tb and a product of the backlight brightness BL3 and the noise lighting interval tc. Since the sum of the product of the backlight brightness BL2 and the noise lighting interval tb and the product of the backlight brightness BL3 and the noise lighting interval tc is greater than the product of the backlight brightness BL1 and the normal lighting interval ta, the second brightness integral being greater than the first brightness integral is achieved.

Eighth Embodiment

The description below is given with reference to FIGS. 5 and 19. FIG. 19 shows a signal timing diagram of a security display system according to an eighth embodiment of the present invention. A main difference between the eighth and fourth embodiments is that, the image asymmetry generator 114 further controls the backlight module 1132 to maintain the backlight brightness BL1 in the noise lighting interval tc, and the backlight brightness BL2 is greater than the backlight brightness BL1. In the eighth embodiment, the display frequency of a normal image F(S) is greater than the display frequency of a noise image F(N); the glasses-open period Ton includes the normal lighting interval ta, and the glasses-shut period Toff includes the noise lighting interval tb and the noise lighting interval tc. The image asymmetry generator 114 controls the backlight brightness BL2 of the noise image in the noise lighting interval tb to be greater than the backlight brightness BL1 of the normal image in the normal lighting interval ta, so that the second brightness integral is greater than the first brightness integral. To render a greater second brightness integral of the noise image F(N) than the first brightness integral of the normal image F(S), the image asymmetry generator 114 controls the backlight module 1132 to maintain the backlight brightness BL1 in the normal lighting interval ta, the backlight brightness BL2 in the noise lighting interval tb, and the backlight brightness BL1 in the noise lighting interval tc. The backlight brightness BL2 is greater than the backlight brightness BL1.

In FIG. 19, the first brightness integral equals a product of the backlight brightness BL1 and all the normal lighting intervals ta, and the second brightness integral equals a sum of product of the backlight brightness BL2 and the noise lighting interval tb and a product of the backlight brightness BL1 and the noise lighting interval tc. Since the sum of the product of the backlight brightness BL2 and the noise lighting interval tb and the product of the backlight brightness BL1 and the noise lighting interval tc is greater than the product of the backlight brightness BL1 and the normal lighting interval ta, the second brightness integral being greater than the first brightness integral is achieved.

Ninth Embodiment

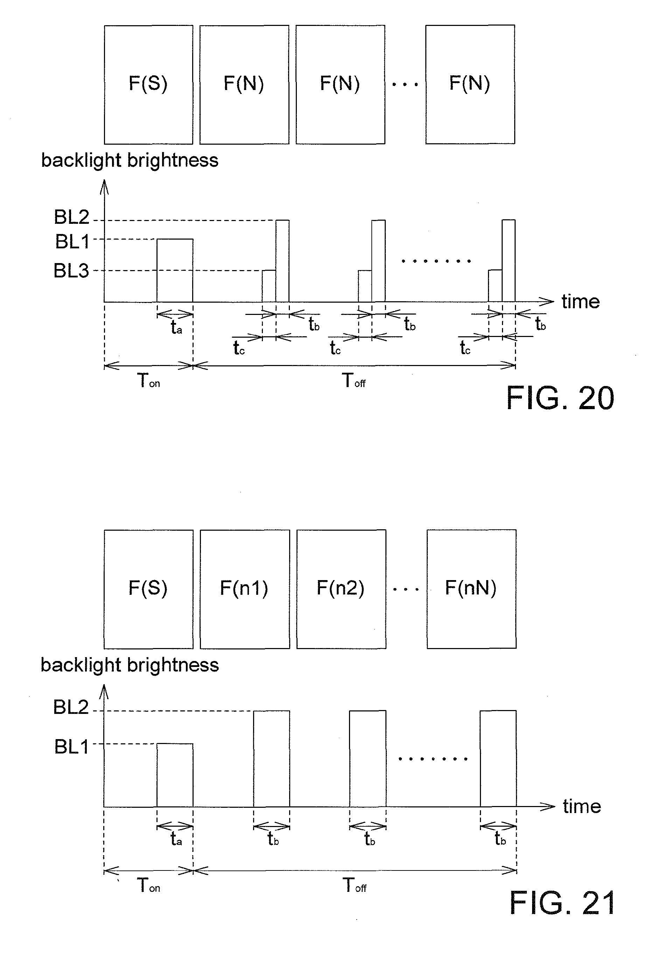

The description below is given with reference to FIGS. 5 and 20. FIG. 20 shows a signal timing diagram of a security display system according to a ninth embodiment of the present invention. A main difference between the ninth and sixth embodiments is that, the image asymmetry generator 114 further controls the backlight module 1132 to maintain the backlight brightness BL3 in the noise lighting interval tc The backlight brightness BL2 is greater than the backlight brightness BL1, and the backlight brightness BL1 is greater than the backlight brightness BL3. In the ninth embodiment, the display frequency of a normal image F(S) is smaller than the display frequency of a noise image F(N); the glasses-open period Ton includes the normal lighting interval ta, and the glasses-shut period Toff includes the noise lighting interval tb and the noise lighting interval tc. The image asymmetry generator 114 controls the backlight brightness BL2 of the noise image in the noise lighting interval tb to be greater than the backlight brightness BL1 of the normal image, and controls the backlight brightness BL3 of the noise image in the noise lighting interval tc to be smaller than the backlight brightness BL1 of the normal image, so that the second brightness integral is greater than the first brightness integral. To render a greater second brightness integral of the noise image F(N) than the first brightness integral of the normal image F(S), the image asymmetry generator 114 controls the backlight module 1132 to maintain the backlight brightness BL1 in the normal lighting interval ta, the backlight brightness BL2 in the noise lighting interval tb, and the backlight brightness BL3 in the noise lighting interval tc. The backlight brightness BL2 is greater than the backlight brightness BL1, and the backlight brightness BL1 is greater than the backlight brightness BL3.

In FIG. 20, the first brightness integral equals a product of the backlight brightness BL1 and all the normal lighting intervals ta, and the second brightness integral equals a sum of a product of the backlight brightness BL2 and all the noise lighting intervals tb and a product of the backlight brightness BL3 and all the noise lighting intervals tc. Since the sum of the product of the backlight brightness BL2 and all the noise lighting intervals tb and the product of the backlight brightness BL3 and all the noise lighting intervals tc is greater than the product of the backlight brightness BL1 and the normal lighting interval ta, the second brightness integral being greater than the first brightness integral is achieved.

Tenth Embodiment

The description below is given with reference to FIGS. 5 and 21. FIG. 21 shows a signal timing diagram of a security display system according to a tenth embodiment of the present invention. A main difference between the tenth and sixth embodiments is that, the noise image F(N) comprises sub noise images F(n1) to F(nN), and the backlight brightness BL2 is greater than the backlight brightness BL1. The noise lighting interval tb is respectively present in the sub noise images F(n1) to F(nN). The image asymmetry generator 114 controls the backlight module 1132 to maintain the backlight brightness BL1 in the normal lighting interval ta and the backlight brightness BL2 in the noise lighting interval tb.

In FIG. 21, the first brightness integral equals a product of the backlight brightness BL1 and the normal lighting interval ta, and the second brightness integral equals a product of the backlight brightness BL2 and all the noise lighting intervals tb. Since the product of the backlight brightness BL2 and all the noise lighting intervals tb is greater than the product of the backlight brightness BL1 and the normal lighting interval ta, the second brightness integral being greater than the first brightness integral is achieved.

Eleventh Embodiment

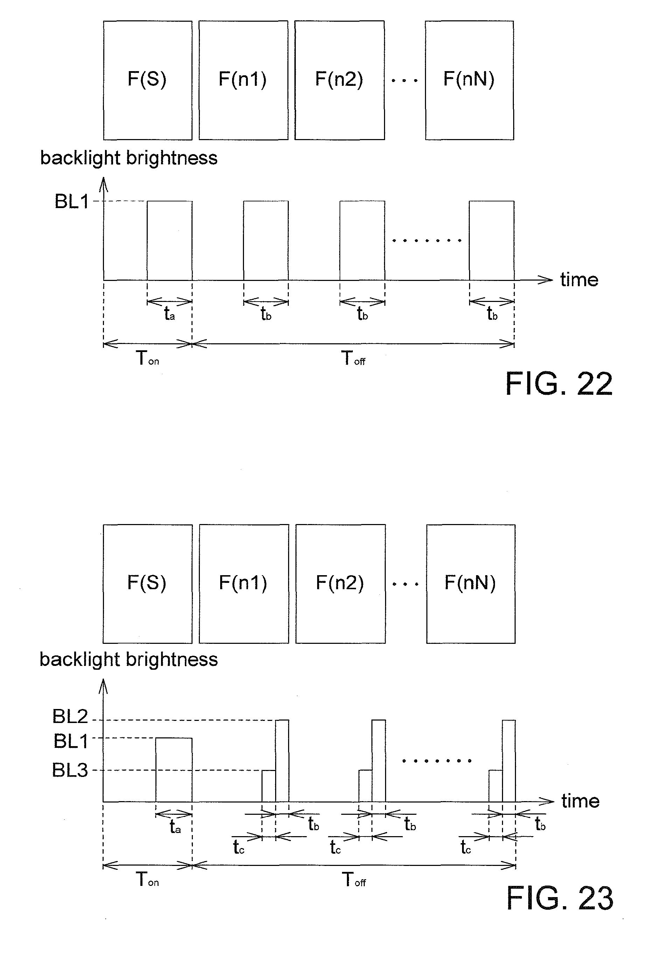

The description below is given with reference to FIGS. 5 and 22. FIG. 22 shows a signal timing diagram of a security display system according to an eleventh embodiment of the present invention. A main difference between the eleventh and sixth embodiments is that, the noise image F(N) comprises sub noise images F(n1) to F(nN), and the backlight brightness BL2 equals the backlight brightness BL1. The noise lighting interval tb is respectively present in the sub noise images F(n1) to F(nN). The image asymmetry generator 114 controls the backlight module 1132 to maintain the backlight brightness BL1 in the normal lighting interval ta and the backlight brightness BL2 in the noise lighting interval tb.

In FIG. 22, the first brightness integral equals a product of the backlight brightness BL1 and the normal lighting interval ta, and the second brightness integral equals a product of the backlight brightness BL2 and all the noise lighting intervals tb. Since the product of the backlight brightness BL2 and all the noise lighting intervals tb is greater than the product of the backlight brightness BL1 and the normal lighting interval ta, the second brightness integral being greater than the first brightness integral is achieved.

Twelfth Embodiment

The description below is given with reference to FIGS. 5 and 23. FIG. 23 shows a signal timing diagram of a security display system according to a twelfth embodiment of the present invention. A main difference between the twelfth and ninth embodiments is that, the noise image F(N) comprises sub noise images F(n1) to F(nN). The sub noise images F(n1) to F(nN) respectively comprise a noise lighting interval tb and a noise lighting interval tc. The image asymmetry generator 114 controls the backlight module 1132 to maintain the backlight brightness BL1 in the normal lighting interval ta, the backlight brightness BL2 in the noise lighting interval tb and the backlight brightness BL3 in the noise lighting interval tc. The backlight brightness BL2 is greater that the backlight brightness BL1, and the backlight brightness BL1 is greater that the backlight brightness BL3.

In FIG. 23, the first brightness integral equals a product of the backlight brightness BL1 and all the normal lighting intervals ta, and the second brightness integral equals a sum of a product of the backlight brightness BL2 and all the noise lighting intervals tb and a product of the backlight brightness BL3 and all the noise lighting intervals tc. Since the sum of the product of the backlight brightness BL2 and all the noise lighting intervals tb and the product of the backlight brightness BL3 and all the noise lighting intervals tc is greater than the product of the backlight brightness BL1 and the normal lighting interval ta, the second brightness integral being greater than the first brightness integral is achieved.

Thirteenth Embodiment

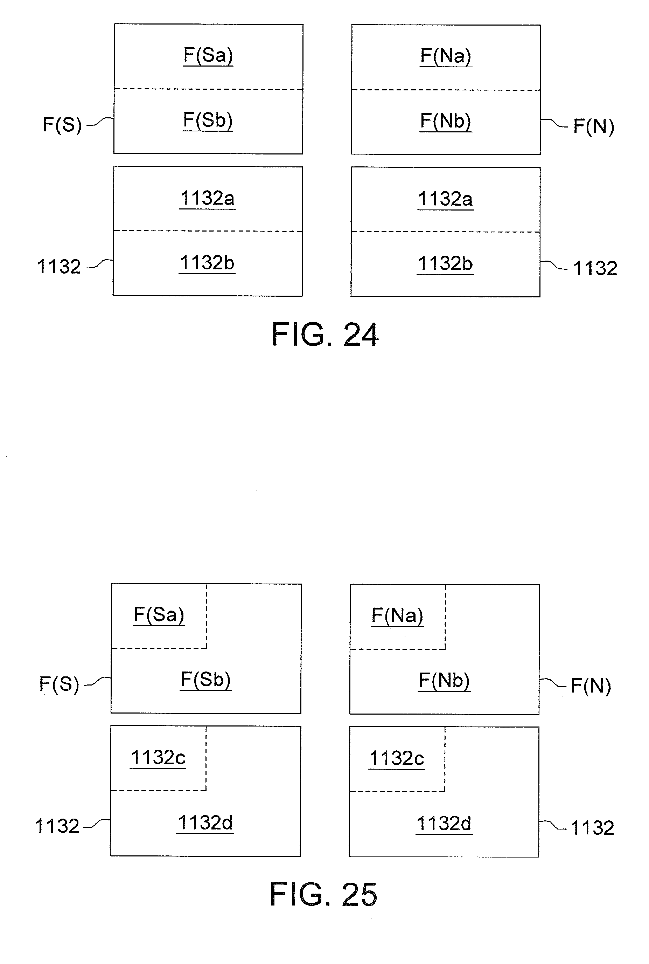

The description below is given with reference to FIGS. 5 and 24. FIG. 24 shows a schematic diagram of a normal image, a noise image and a backlight module according to a thirteenth embodiment of the present invention. The image asymmetry generator 114 is capable of controlling the backlight module 1132 in partitions such that different backlight brightnesses are generated at different backlight regions. A main difference between the thirteenth and fourth embodiments is that, the backlight module 1132 comprises a backlight region 1132a and a backlight region 1132b, and a normal image F(S) comprises a correct image region F(Sa) and a security image region F(Sb). The correct image region F(Sa) and the security image region F(Sb) respectively correspond to the backlight region 1132a and the backlight region 1132b. When displaying the normal image F(S), the image asymmetry generator 114 controls the backlight region 1132a and the backlight region 1132b to maintain the backlight brightness BL1. When displaying a noise image F(N), the image asymmetry generator 114 controls the backlight region 1132a to maintain the backlight brightness BL1, and controls the backlight region 1132b to maintain the backlight brightness BL2, wherein the backlight brightness BL2 is greater than the backlight brightness BL1.

Fourteenth Embodiment

The description below is given with reference to FIGS. 5 and 25. FIG. 25 shows a schematic diagram of a normal image, a noise image and a backlight module according to a fourteenth embodiment of the present invention. A main difference between the fourteenth and fourth embodiments is that, the backlight module 1132 comprises a backlight region 1132c and a backlight region 1132d, a normal image F(S) comprises a correct image region F(Sa) and a security image region F(Sb). The correct image region F(Sa) and the security image region F(Sb) respectively correspond to the backlight region 1132c and the backlight region 1132d. When displaying the normal image F(S), the image asymmetry generator 114 controls the backlight region 1132c and the backlight region 1132d to maintain the backlight brightness BL1. When displaying a noise image F(N), the image asymmetry generator 114 controls the backlight region 1132c to maintain the backlight brightness BL1, and controls the backlight region 1132d to maintain the backlight brightness BL2, wherein the backlight brightness BL2 is greater than the backlight brightness BL1.

Fifteenth Embodiment

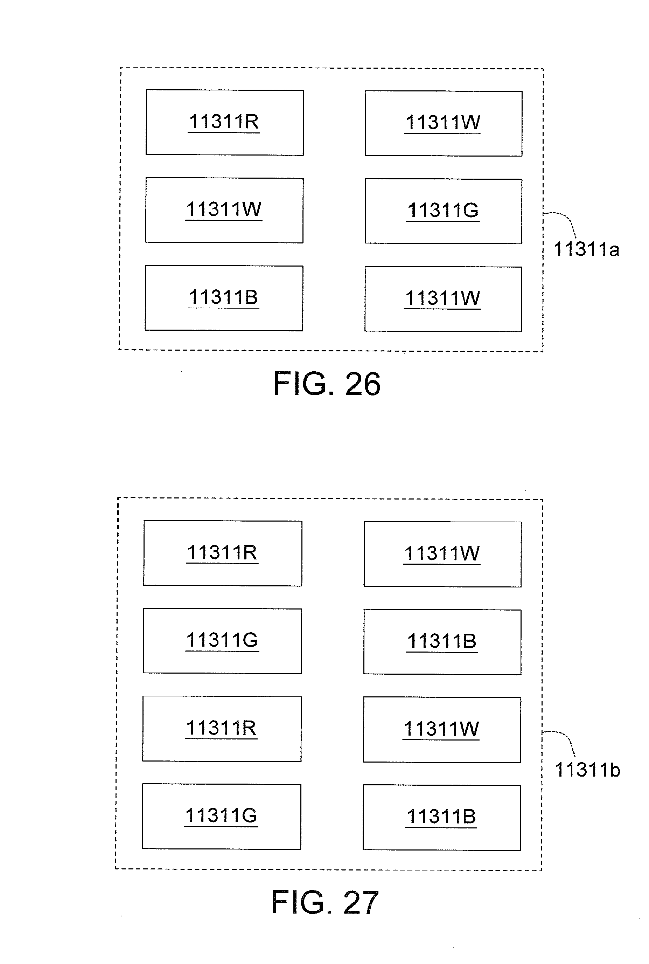

The description below is given with reference to FIGS. 5 and 26. FIG. 26 shows a schematic diagram a pixel structure according to a fifteenth embodiment of the present invention. Apart from the above approaches for rendering a greater second brightness integral than the first brightness integral, through a pixel structure that is added with a fourth-color sub-pixel, the brightness of a noise image may be increased and the brightness of a normal image may be decreased. For example, the panel 1131 comprises a plurality of pixels. In FIG. 26, a pixel 11311a is taken as an example. The pixel 11311a comprises a first-color sub-pixel 11311R, a second-color sub-pixel 11311G, a third-color sub-pixel 11311B, and a fourth-color sub-pixel 11311W. The fourth-color sub-pixel 11311 W is neighboring to the first-color sub-pixel 11311 R, the second-color sub-pixel 11311 G and the third-color sub-pixel 11311 B.

For example, the first-color sub-pixel 11311R, the second-color sub-pixel 11311G and the third-color sub-pixel 11311B are respectively a red sub-pixel, a green sub-pixel and a blue sub-pixel, and the fourth-color sub-pixel is a white sub-pixel or a yellow sub-pixel. The fourth-color sub-pixel provides a larger penetration power for the noise image F(N) displayed by the panel 1131 than for the normal image F(S) displayed by the panel 1131. For example, the fourth-color sub-pixel 11311 W appears as a black dot when the normal image F(S) is displayed and appears as a white dot when the noise image F(N) is displayed. Since the fourth-color sub-pixel 11311W appears as a black dot when the normal image F(S) is displayed and appears as a white dot when the noise image F(N) is displayed, the penetration power of the noise image F(N) is greater than the penetration power of the normal image F(S), and so the second brightness integral being greater than the first brightness integral is achieved.

Sixteenth Embodiment

The description below is given with reference to FIGS. 5 and 27. FIG. 27 shows a schematic diagram a pixel structure according to a sixteenth embodiment of the present invention. The panel 1131 comprises a plurality of pixels. In FIG. 27, a pixel 11311b is taken as an example. The pixel 11311b comprises a first-color sub-pixel 11311R, a second-color sub-pixel 11311G, a third-color sub-pixel 11311B, and a fourth-color sub-pixel 11311W. The fourth-color sub-pixel 11311W is neighboring to the first-color sub-pixel 11311 R, the second-color sub-pixel 11311 G and the third-color sub-pixel 11311 B.

For example, the first-color sub-pixel 11311R, the second-color sub-pixel 11311G and the third-color sub-pixel 11311 B are respectively a red sub-pixel, a green sub-pixel and a blue sub-pixel, and the fourth-color sub-pixel is a white sub-pixel or a yellow sub-pixel. The fourth-color sub-pixel provides a larger penetration power for the noise image F(N) displayed by the panel 1131 than for the normal image F(S) displayed by the panel 1131. For example, the fourth-color sub-pixel 11311W appears as a black dot when the normal image F(S) is displayed and appears as a white dot when display the noise image F(N) is displayed. Since the fourth-color sub-pixel 11311W appears as a black dot when the normal image F(S) is displayed and appears as a white dot when the noise image F(N) is displayed, the penetration power of the noise image F(N) is greater than the penetration power of the normal image F(S), and so the second brightness integral being greater than the first brightness integral is achieved.

It should be noted that, the first-color sub-pixel 11311R, the second-color sub-pixel 11311G, the third-color sub-pixel 11311B and the fourth-color sub-pixel W may be arranged in different configurations. The examples described with reference to FIGS. 26 and 27 are for illustrative purposes rather than limiting the invention therein. Without departing from the spirit and the scope of the present invention, various modifications may be made to the described embodiments.

Seventeenth Embodiment

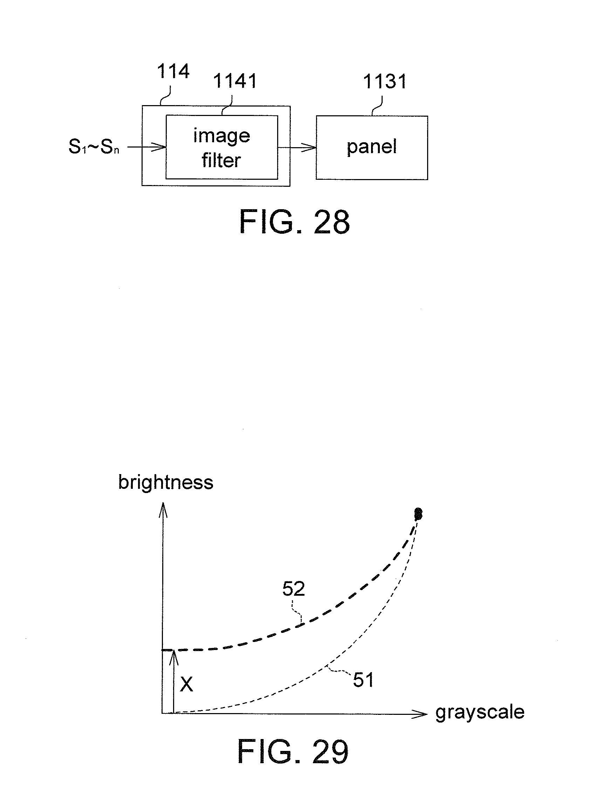

The description below is given with reference to FIGS. 5 and 28. FIG. 28 shows a schematic diagram of an image filter according to a seventeenth embodiment of the present invention. The image asymmetry generator 114 further comprises an image filter 1141, which is a grid filter, a vertical filter or a horizontal filter, for example. The normal image signals $S_1$ to $S_n$, after passing through the image filter 1141, are outputted to the panel 1131 to display a filtered normal image. Due to that the normal image signal S is filtered by the filter 1141, an overall brightness of the normal image displayed by the panel 1131 is lowered, so that the second brightness integral being greater than the first brightness integral is achieved.

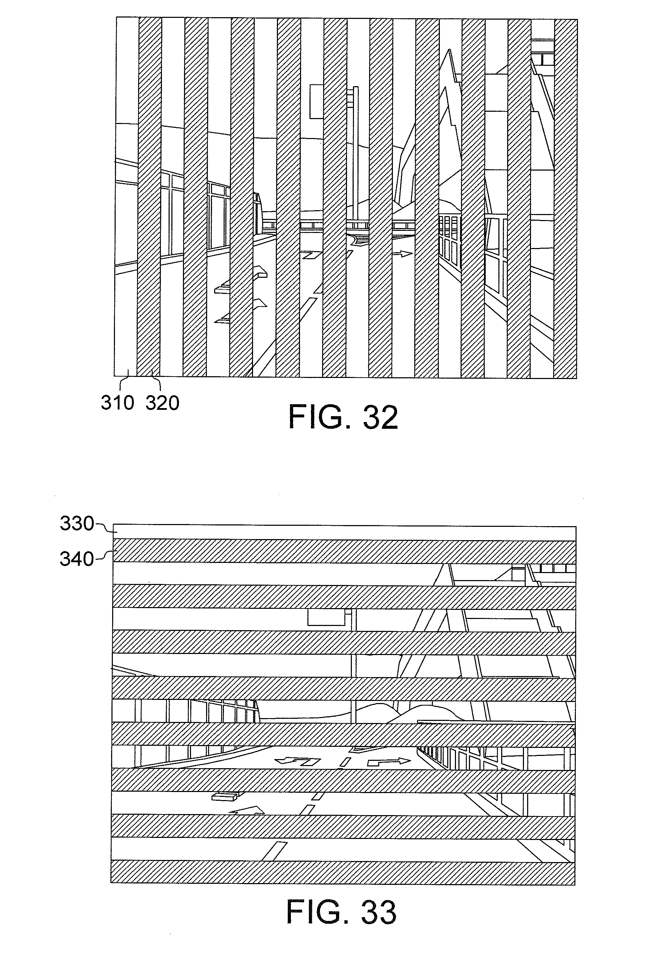

Referring to FIGS. 28 and 32, wherein FIG. 32 shows a schematic diagram of a displayed image after removing even-column display lines by a filter. For example, supposing the image filter 1141 is a vertical filter, even-column display lines 320 of a normal image are removed by the image filter 1141 to leave the panel 1131 to only display odd-column display lines 310, as shown in FIG. 32. In FIG. 32, although an example of filtering the even-column display lines 320 is used for illustration, it should be noted that the image filter 1141 may also remove the odd-column display lines 310 of a normal image to leave the panel 1131 to only display the even-column display lines 320.

Referring to FIGS. 28 and 33, wherein FIG. 33 shows a schematic diagram of a displayed image after removing even-row display lines by a filter. For example, supposing the image filter 1141 is a vertical filter, even-row display lines 340 of a normal image are removed by the image filter 1141 to leave the panel 1131 to only display odd-row display lines 330, as shown in FIG. 33. In FIG. 33, although an example of filtering the even-row display lines 3420 is used for illustration, it should be noted that the image filter 1141 may also remove the odd-row display lines 330 of a normal image to leave the panel 1131 to only display the even-row display lines 340.

Eighteenth Embodiment

The description below is given with reference to FIGS. 5 and 9. FIG. 29 shows a schematic diagram of adjusting a noise image signal according to an eighteenth embodiment of the present invention. The image asymmetry generator 114 further adjusts a noise image signal according to a reference value X (e.g., a predetermined value) and outputs the adjusted noise image signal to the panel 1131 to display the noise image. For example, the noise image signal comprises a red input sub-pixel value Ri, a green input sub-pixel value Gi, and a blue input sub-pixel value Bi, which respectively correspond to a red output sub-pixel value Ro, a green output sub-pixel Go, and a blue output sub-pixel value Bo.

$$Ro = Ri \times (1 - \frac{X}{255}) + X \quad , \quad Go = Gi \times (1 - \frac{X}{255}) + X \quad \text{and} \quad Bo = Bi \times (1 - \frac{X}{255}) + X \, .$$ relationship curve 51 between a grayscale and a brightness of an unadjusted noise image and a curve 52 between a grayscale and a brightness of an adjusted noise image are as shown in FIG. 29. Since the adjusted noise image is capable of increasing an overall brightness, the second brightness integral being greater than the first brightness integral is achieved.

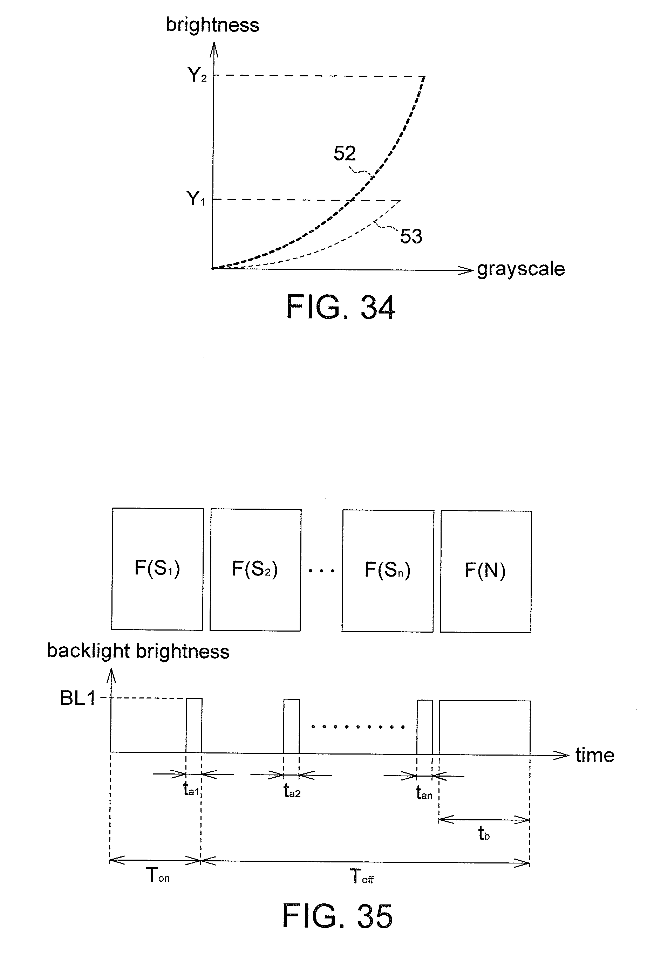

Referring to FIGS. 5 and 34, wherein FIG. 34 shows a schematic diagram of adjusting another noise image signal according to the eighteenth embodiment of the present invention. In FIG. 29, a same maximum brightness for the relationship curves 51 and 52 is taken as an example rather than limiting the present invention therein; that is, relationship curves having different maximum brightnesses may also be adopted in different embodiments. For example, a relationship curve 53 in FIG. 34 has a maximum brightness $Y_1$, whereas a relationship curve 54 has a maximum brightness $Y_2$. For both examples shown in FIGS. 29 and 34, the second brightness integral being greater than the first brightness integral is achieved through adjusting the relationship curves.

Nineteenth Embodiment

The description below is given with reference to FIGS. 5 and 35. FIG. 35 shows a signal timing diagram of a security display system according to a nineteenth embodiment of the present invention. A main difference between the nineteenth and second embodiments is that, in the nineteenth embodiment, several users are allowed to respectively observe a corresponding normal image. More specifically, normal images $F(S_1)$ to $F(S_n)$ are respectively observed by n users, i.e., different normal images are observed by different users. For example, a first user is able to observe the normal image $F(S_1)$, a second user is able to observe the normal image $F(S_2)$,..., and an nth user is able to observe the normal image $F(S_n)$.

For a first user, the glasses-open period $T_{on}$ in the nineteenth embodiment includes a normal lighting interval $t_{a1}$, and the glasses-shut period $T_{off}$ includes normal lighting intervals $t_{a2}$ to $t_{an}$ and a noise lighting interval $t_b$. The image asymmetry generator 114 controls the display period of the noise image to be longer than the display period of the normal image, so that the second brightness integral is greater than the first brightness integral. To render a greater display period of the noise image than that of the normal image, the image asymmetry generator 114 controls the backlight module 114 to maintain the backlight brightness BL1 in a normal lighting interval $t_a$ and in a noise lighting interval $t_b$, and a sum of the normal lighting intervals $t_{a2}$ to $t_{an}$ and the noise lighting interval $t_b$ is greater the normal lighting interval $t_{a1}$.

In FIG. 35, the first brightness integral equals a product of the backlight brightness BL1 and the normal lighting interval $t_{a1}$, and the second brightness integral equals a sum of a product of the backlight brightness BL1 and the noise lighting interval $t_b$ and a product of the backlight brightness BL1 and the normal lighting intervals $t_{a2}$ to $t_{an}$. Since the sum of the noise lighting interval $t_b$ and the normal lighting intervals $t_{a2}$ to $t_{an}$ is larger than the normal lighting interval $t_{a1}$, the second brightness integral being greater than the first brightness integral is achieved.

In summary a security display system including security glasses and a security display are provided. The security display includes a noise image generator, a synchronous packet generator, a display unit and an image asymmetry generator. The noise image generator generates a noise image signal according to a normal image signal. The synchronous packet generator outputs a synchronous packet to the security glasses. The display unit displays a normal image according to the normal image signal in a glasses-open period and a noise image according to the noise image signal in a glasses-shut period. The image asymmetry generator corresponds to a first brightness integral when displaying the normal image in the glasses-open period, and to a second brightness integral when displaying the noise image the glasses-shut period. The second brightness integral is greater than the first brightness integral.

While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

**Claims**

**1.** A display (11), comprising:

a noise image generator (111), for generating a noise image signal according to a normal image signal;

a synchronous packet generator (112), for outputting a synchronous packet to the glasses according to the normal image signal and the noise image signal;

a display unit (113), for displaying a normal image according to the normal image signal in a glasses-open period, and displaying a noise image according to the noise image signal in a glasses-shut period; and

an image asymmetry generator (114), for controlling the display unit to correspond to a first brightness integral when displaying the normal image in the glasses-open period, and to a second brightness integral when displaying the noise image in the glasses-shut period, the second brightness integral being greater than the first brightness integral.

2. The display according to claim 1, wherein the second brightness integral is at least greater than four times the first brightness integral.

3. The display according to claim 1 or 2, wherein the noise image comprises a plurality of polygonal color blocks respectively having a length between 3 to 30 pixels.

4. The display according to one of the claims 1-3, wherein the display unit (113) comprises a panel (1131) and a backlight module (1132), the backlight module provides a backlight to the panel, the image asymmetry generator (114) controls the backlight module or the panel such that the second brightness integral is greater than the first brightness integral.

5. The display according to claim 4, wherein the glasses-open period comprises a normal lighting interval and the glasses-shut period comprises a noise lighting interval, the image asymmetry generator (114) controls the backlight module to maintain a backlight brightness in the normal lighting interval and in the noise lighting interval, and the noise lighting interval is greater than the normal lighting interval.

6. The display according to claim 4, wherein the glasses-open period comprises a normal lighting interval and the glasses-shut period comprises a noise lighting interval, the image asymmetry generator (114) controls the backlight module to maintain a first backlight brightness in the normal lighting interval and a second backlight brightness in the noise lighting interval, the second backlight brightness is greater than the first backlight brightness, and the noise lighting interval equals the normal lighting interval.

7. The display according to claim 4, wherein the glasses-open period comprises a normal lighting interval and the glasses-shut period comprises a first noise lighting interval and a second noise lighting interval, the image asymmetry generator (114) controls the backlight module to maintain a first backlight brightness in the normal lighting interval, a second backlight brightness in the first noise lighting interval, and a third backlight brightness in the second noise lighting interval, and the third backlight brightness is greater than the first backlight brightness and the first backlight brightness is greater than the second backlight brightness.

8. The display according to claim 4, wherein the glasses-open period comprises a plurality of normal lighting intervals and the glasses-shut period comprises a first noise lighting interval and a second noise lighting interval, the image asymmetry generator (114) controls the backlight module to maintain a first backlight brightness in the normal lighting intervals, a second backlight brightness in the first noise lighting interval, and the first backlight brightness in the second noise lighting interval, and the second backlight brightness is greater than the first backlight brightness.

9. A pair of glasses (12; 13), comprising:

   a receiver (121), for receiving the synchronous packet (P);
   a lens set (128);
   a driving circuit (127), for driving the lens set; and
   a microcontroller (124), for controlling the driving circuit according to the synchronous packet.

10. The glasses according to claim 9, wherein the synchronous packet (P) comprises a synchronous code, an address code, a mode code and a command code, and the glasses further comprise:

   a mode display device (125);
   an address display device (126); and
   a decoder (123), for determining whether the address code is same as a predetermined address, generating a synchronous signal to the microcontroller according to the synchronous code, generating a mode signal to the mode display device or controller according to the mode code, generating a command signal to the microcontroller according to the command code, and outputting an address signal to the microcontroller according to the address code to display the address code by the address display device.

FIG. 1

FIG. 2

FIG. 3

45     43          41

47

46

42          44

FIG. 4

11

112

synchronous
packet
generator        →P

111

noise
image          N₁~Nₙ
generator                    Add(n)    114    113   1132
                              Mod
                                       image
S₁~Sₙ                                  asymmetry
                                       generator

                                                     1131

FIG. 5

```
                    ┌─────────────┐
                    │    Start    │
                    └─────────────┘
                           │
                           ▼
    ┌──────────────────────────────────────────┐
    │      Generating noise image signal        │
    │    according to normal image signal       │─── 31
    └──────────────────────────────────────────┘
                           │
                           ▼
    ┌──────────────────────────────────────────┐
    │   Outputting synchronous packet to security│
    │   glasses according to normal image signal and│── 32
    │             noise image signal             │
    └──────────────────────────────────────────┘
                           │
                           ▼
    ┌──────────────────────────────────────────┐
    │ Displaying normal image according to normal image│
    │ signals in glasses-open period and displaying noise│
    │   image according to noise image signals in│
    │   glasses-shut period.  Image asymmetry generator│
    │   controlling display unit to correspond to first│── 33
    │ brightness integral when displaying normal image in│
    │ glasses-open period, and controlling display unit to│
    │   correspond to second brightness integral when│
    │   displaying noise image in glasses-shut period│
    └──────────────────────────────────────────┘
                           │
                           ▼
                    ┌─────────────┐
                    │     End     │
                    └─────────────┘
```

# FIG. 6

EP 2 523 186 A2

12

| Sync | Add | Mod | Cmd |

P

Sync

**FIG. 7**

| 122 | | 126 |

| 125 |

| 121 | | 123 | | 124 | | 1271 |

128

| 1272 | | 1282 | 1281 |

127

| Synchronous code | Address code | Mode code | Command code |
|---|---|---|---|
| 0x55 | 0x00 | 0x00 (3D) | 0x00 (both shut) |
| | | | 0x01 (left shut, right open) |
| | | | 0x10 (left open, right shut) |
| | | | 0x11 (both open) |
| 0x55 | 0x01 | 0x01(3D security 1) | 0x00 (both shut) |
| | | | 0x01 (left shut, right open) |
| | | | 0x10 (left open, right shut) |
| | | | 0x11 (both open) |
| 0x55 | 0x02 | 0x01(3D security 2) | 0x00 (both shut) |
| | | | 0x01 (left shut, right open) |
| | | | 0x10 (left open, right shut) |
| | | | 0x11 (both open) |
| 0x55 | 0x00 | 0x10(2D) | 0x00 (both shut) |
| | | | 0x01 (left shut, right open) |
| | | | 0x10 (left open, right shut) |
| | | | 0x11 (both open) |
| 0x55 | 0x01 | 0x11(2D security 1) | 0x00 (both shut) |
| | | | 0x01 (left shut, right open) |
| | | | 0x10 (left open, right shut) |
| | | | 0x11 (both open) |
| 0x55 | 0x02 | 0x11(2D security 2) | 0x00 (both shut) |
| | | | 0x01 (left shut, right open) |
| | | | 0x10 (left open, right shut) |
| | | | 0x11 (both open) |
| 0x55 | 0xFF | 0x11(2D security 255) | 0x00 (both shut) |
| | | | 0x01 (left shut, right open) |
| | | | 0x10 (left open, right shut) |
| | | | 0x11 (both open) |

# FIG. 8

FIG. 9

EP 2 523 186 A2

EP 2 523 186 A2

FIG. 10

FIG. 11

F(S)    F(N)    F(S)

backlight brightness

BL1

$t_a$    $t_b$    $t_a$

$T_{on}$    $T_{off}$    $T_{on}$

time

## FIG. 12

F(S)    F(S)    · · ·    F(S)    F(N)

backlight brightness

BL1

$t_a$    $t_a$    · · · · · · · · ·    $t_a$

$T_{on}$    $T_{off}$

time

## FIG. 13

F(S)  F(N)  F(N)  · · ·  F(N)

backlight brightness

BL1

time

$t_a$  $t_b$  $t_b$  $t_b$

$T_{on}$  $T_{off}$

# FIG. 14

F(S)  F(N)  F(S)

backlight brightness

BL2

BL1

time

$t_a$  $t_b$  $t_a$

$T_{on}$  $T_{off}$  $T_{on}$

# FIG. 15

FIG. 16

FIG. 17

FIG. 18

FIG. 19

FIG. 20

FIG. 21

F(S)   F(n1)   F(n2)  · · ·  F(nN)

backlight brightness

BL1

$t_a$   $t_b$   $t_b$   $t_b$

$T_{on}$   $T_{off}$

## FIG. 22

F(S)   F(n1)   F(n2)  · · ·  F(nN)

backlight brightness

BL2
BL1
BL3

$t_a$   $t_b$   $t_b$   $t_b$

$t_c$   $t_c$   $t_c$

$T_{on}$   $T_{off}$

## FIG. 23

F(S) —

F(Sa)

F(Sb)

F(N)

F(Na)

F(Nb)

1132 —

1132a

1132b

1132

1132a

1132b

# FIG. 24

F(S) —

F(Sa)

F(Sb)

F(N)

F(Na)

F(Nb)

1132 —

1132c

1132d

1132

1132c

1132d

# FIG. 25

| | |
|---|---|
| 11311R | 11311W |
| 11311W | 11311G |
| 11311B | 11311W |

11311a

## FIG. 26

| | |
|---|---|
| 11311R | 11311W |
| 11311G | 11311B |
| 11311R | 11311W |
| 11311G | 11311B |

11311b

## FIG. 27

114  1141                          1131

S₁~Sₙ →  | image filter |  →  | panel |

## FIG. 28

brightness

52

X

51

grayscale

## FIG. 29

| Mod | Picture currently displayed | Add(n) | Add | Cmd | Remark |
|---|---|---|---|---|---|
| 2D | F(S1) | 1 | 1 | 0x11 | 2D image first displayed |
| 2D | F(S2) | 2 | 2 | 0x11 | |
| 2D | F(Sn) | n | n | 0x11 | |
| 2D | F(N1)~F(Nn) | N.A | N.A | N.A | Function not applicable |
| 3D | F(S1) | 1 | 1 | 0x01 | (First right-eye image) |
| 3D | F(S2) | 2 | 1 | 0x10 | (First left-eye image) |
| 3D | F(S3) | 3 | 2 | 0x01 | (Second right-eye image) |
| 3D | F(S4) | 4 | 2 | 0x10 | (Second left-eye image) |
| 3D | F(Sn-1) | n-1 | n/2 | 0x01 | (n/2th right-eye image) |
| 3D | F(Sn) | n | n/2 | 0x10 | (n/2th left-eye image) |
| 3D | F(N1)~F(Nn) | N.A | N.A | N.A | Function not applicable |

FIG. 30

EP 2 523 186 A2

| Mod | Picture currently displayed | Add(n) | Add | Cmd | Remark |
|---|---|---|---|---|---|
| 2D security | F(S1) | 1 | 1 | 0x11 | 2D image first displayed |
| 2D security | F(S2) | 2 | 2 | 0x11 | |
| 2D security | F(Sn) | n | n | 0x11 | |
| 2D security | F(N1)~F(Nn) | 0 | 0 | 0x00 | Noise image |
| 3D security | F(S1) | 1 | 1 | 0x01 | (First right-eye image) |
| 3D security | F(S2) | 2 | 1 | 0x10 | (First left-eye image) |
| 3D security | F(S3) | 3 | 2 | 0x01 | (Second right-eye image) |
| 3D security | F(S4) | 4 | 2 | 0x10 | (Second left-eye image) |
| 3D security | F(Sn-1) | n-1 | n/2 | 0x01 | (n/2th right-eye image) |
| 3D security | F(Sn) | n | n/2 | 0x10 | (n/2th left-eye image) |
| 3D security | F(N1)~F(Nn) | 0 | 0 | 0x00 | Noise image |

FIG. 31

310 320

FIG. 32

330
340

FIG. 33

brightness

Y$_2$

52

Y$_1$

53

grayscale

# FIG. 34

F(S$_1$)  F(S$_2$)  · · ·  F(S$_n$)  F(N)

backlight brightness

BL1

time

t$_{a1}$    t$_{a2}$    t$_{an}$

t$_b$

T$_{on}$    T$_{off}$

# FIG. 35

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 100116923